# EUROPEAN PATENT APPLICATION

(11) **EP 4 085 990 A1**
(43) Date of publication of application: **09.11.2022**
(21) Application number: 20909777.3
(22) Date of filing: 17.11.2020
(51) Int. Cl.: B01D 46/00, B01D 46/12, B01D 39/14, B01D 39/20, B60H 3/06

(54) **CABIN FILTER UNIT**

(30) Priority: 02.01.2020 KR 20200000374
(71) Applicant: Handok Clean Tech Co. Ltd, Yuseong-gu Daejeon 34028 (KR)
(72) Inventor: KO, In Sun, Daejeon 35244 (KR); LEE, Kwang Kyu, Daejeon 34067 (KR); BAN, Jae Hyun, Daejeon 34890 (KR)
(74) Representative: Reich, Jochen
(86) International application number: PCT/KR2020/016148
(87) International publication number: WO 2021/137422

(57) **Abstract**

The present invention relates to a cabin filter unit, and may comprise: a HEPA filter; and carbon block filters placed at the rear end of the HEPA filter, wherein each of the carbon block filters has a structure which has multiple perforations formed and distributed throughout the entire area thereof for the flow of air, and is formed to satisfy the perforation ratio of 30~50% with reference to φ7∼10, two or more carbon block filters being stacked, and disposed to be in close contact with each other or spaced apart from each other.

## Description

### [Technical Field]

The present invention relates to a cabin filter unit taking charge of filtering harmful air or gas. More particularly, the present invention relates to a cabin filter unit that can simultaneously remove all of microdust, yellow dust, and various harmful gases including sooty smoke, and can additionally provide a deodorization function by being manufactured such that a HEPA filter and a carbon block filter are assembled at the front and rear ends thereof.

### [Background Art]

In general, a cabin filter, which is a filter device for taking charge of filtering harmful air or gas, is usually mounted and used in vehicles and is used to improve the quality of the air in vehicles.

The cabin filter, which is a filter serving to filter external air flowing in a vehicle to purify the internal air in the vehicle, is also used to filter not only harmful air or gas contained in the external air, but also harmful gas such as cigarette smoke or various VOCs produced in the interior.

The cabin filter also takes charge of filtering external air when the external air outside a vehicle flows into the vehicle through an air conditioning system, so it is also called an 'air conditioner filter'.

When the cabin filter is left for a long period of time, the filtering efficiency is deteriorated and bad smell is emitted due to mold, etc. growing inside an air conditioner. In particular, in seasons with a large amount of microdustor yellow dust, it is recommended to replace the cabin filter early.

For reference, an air filter is a filter disposed and used in the engine room of a vehicle to take charge of filtering out foreign substances from air that flows into the engine of a vehicle, and it is a filter used separately from the cabin filter.

Recently, the environmental problem has become very severe due to air pollution by microdust, yellow dust, sooty smoke, etc. contained in the atmosphere. Accordingly, the environmental regulations are increasingly enforced against air pollution all over the world including Korea. In particular, World Health Organization (WHO) has specified microdustas a class one human carcinogen and has regulated microdustby dividing into PM10 (10 um) and PM2.5 (2.5 um).

Accordingly, the interest in the cabin filter that filters the air flowing into a vehicle is increasing together with the interest in the quality of interior air.

Cabin filters that are generally used for vehicles at present are manufactured and used in various types, depending on the uses, such as a particle filter that filters out fine particles, an activated carbon filter that removes harmful gas, and an antibiotic filter that performs antimicrobial activity. However, most of cabin filters are usually manufactured by applying activated carbon to a non-woven fabric and then bending the non-woven fabric.

However, in the cabin filters used in this way in the related art, the efficiency of collecting and filtering out harmful dust or harmful gas from external air is not that high, and there is no high-efficiency filter designed to be able to simultaneously remove all of microdust, yellow dust, and harmful gases.

### [Citation List]

### [Patent Literature]

[Patent Literature 1]
   Korean Patent No. 10-2037660
[Patent Literature 2]
   Korean Patent Application Publication No. 10-2015-0079123
[Patent Literature 3]
   Korean Patent Application Publication No. 10-2019-0096200

### [Solution to Problem]

The present invention has been made to solve the problems described above, and an object of the present invention is to provide a cabin filter unit that can simultaneously remove all of microdust, yellow must, and various harmful gases including sooty smoke, and can additionally provide a deodorization function by being manufactured such that a HEPA filter and a carbon block filter are assembled at the front and rear ends thereof.

Another object of the present invention is to provide a cabin filter unit that can implement a high-efficiency filter that can increase the efficiency of collecting and filtering out microdustor harmful gas and can simultaneously remove all of microdust, yellow dust, and various harmful gases including sooty smoke, etc.

Another object of the present invention is to provide a cabin filter unit that can increase an ability to block and physically and chemically adsorb microdust, etc., can show an excellent deodorization function, and can increase durability and lifespan by combining improved manufacturing technologies of a HEPA filter and a carbon block filter.

Another object of the present invention is to provide a cabin filter unit that can be used for various purposes such as air purification not only for a vehicle, but also for home or industry.

In order to achieve the objects described above, a cabin filter unit includes: a HEPA filter; and a carbon block filter placed at the rear end of the HEPA filter.

The cabin filter unit may further include a non-woven fabric placed at the rear end of the carbon block filter.

The carbon block filter may have a structure which has multiple perforations formed and distributed throughout the entire area thereof for flow of air, and may satisfy a perforation ratio of 30 to 50% with reference to Ø7 to 10.

One carbon block filter may be used, or two or more carbon block filters may be stacked, and when two or more carbon block filters are stacked, they may be in close contact with each other or may be spaced apart from each other.

When two or more carbon block filters are stacked, the carbon block filters may be stacked up and down such that perforations corresponding to each other of the carbon block filters not entirely but partially communicate with each other so that air stays longer and the performance of adsorbing harmful gas can be increased.

The carbon block filter may be manufactured through steps of: mixing activated carbon and a polymer binder at a weight ratio of 10:1.5 to 2; putting the mixture of the activated carbon and the polymer binder into a mold and performing heat treatment on the mixture at temperature of 210°C to 250°C and pressure of 5Kgf/cm² to 10Kgf/cm² for 5 to 15 minutes, thereby forming a block; and cooling in the mold for 20 minutes in the air, in which the activated carbon may be coconutactivated carbon and has a granular size that passes a 30×60 mesh or a 20×45 mesh; and the polymer binder may be ultrahigh molecular weight polyethylene (UHMWPE).

The carbon block filter may undergo a post-processing treatment to increase efficiency of adsorbing harmful gas by giving impregnation performance, and may undergo: performing primary impregnation for 15 to 30 minutes after putting a carbon block filter into a mixed solution of DI water and phosphoric acid (H₃PO₄) of 15%;performing primary drying on the carbon block filter impregnated in the solution mixed with phosphoric acid; performing secondary impregnation for 20 to 30 minutes after putting the carbon block filter, which has undergone the primary drying, into a mixed solution of DI water, KI of 3%, and KOH of 20%; and performing secondary drying on the carbon block filter impregnated in the solution mixed with KI and KOH.

A HEPA filter of H11 or higher may be employed and used for the HEPA filter to satisfy the collection ratio of 95% for 0.3µm particles.

### [Advantageous Effects of Invention]

According to the present disclosure, since a HEPA filter and a carbon block filter are assembled to be placed at the front and rear, there is an advantage that it is possible to simultaneously remove all of microdust, yellow dust, and various harmful gases including sooty smoke.

According to the present invention, it is possible to achieve a high-efficiency filter of which the efficiency of collecting and filtering microdustand harmful gases is increased.

According to the present invention, it is possible to increase an ability to block and physically and chemically adsorb microdust, etc.and show an excellent deodorization function by combining improved manufacturing technologies of a HEPA filter and a carbon block filter.

According to the present invention, a cabin filter unit having excellent durability and a long lifespan is provided, and it is possible to increase the application range such as purifying air not only for a vehicle, but also for home or industry.

### [Brief Description of Drawings]

FIG. 1 is a perspective view showing a cabin filter unit according to an embodiment of the present invention.
FIG. 2 is an exploded perspective view showing the cabin filter unit according to an embodiment of the present invention.
FIG. 3 is a cross-sectional view showing the cabin filter unit according to an embodiment of the present invention.
FIG. 4 is an exemplary view showing the state when one carbon block filter is applied to the cabin filter unit according to an embodiment of the present invention.
FIG. 5 is a perspective view showing an array of two carbon block filters in the cabin filter unit according to an embodiment of the present invention.
FIG. 6 is an exemplary cross-sectional view showing an array of two carbon block filters in the cabin filter unit according to an embodiment of the present invention.
FIG. 7 shows simulation data showing a flow or air analysis result using a CFD program on the cabin filter unit according to an embodiment of the present invention.

### [Description of Embodiments]

Hereinafter, exemplary embodiments of the present invention are described in detail with reference to the accompanying drawings.

Terminologies used in the present invention are terminologies defined in consideration of functions in the present invention and may depend on users, the intention of an operator, or customs, so the definition of the terminologies should be construed as meanings and concepts corresponding to the technical matters of the present invention.

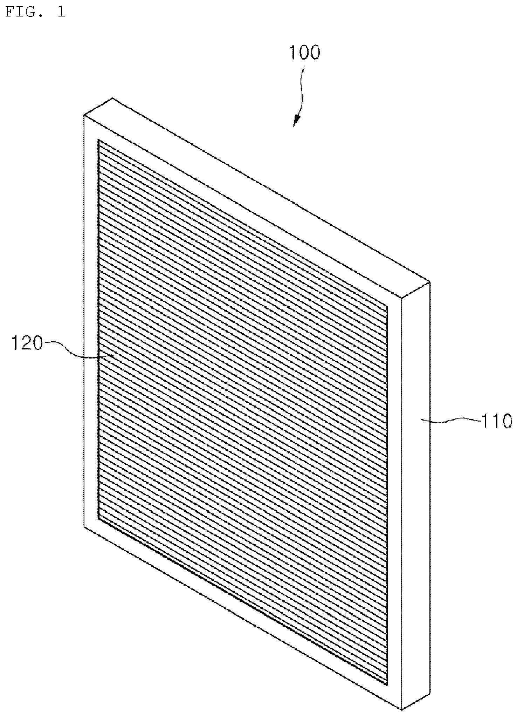

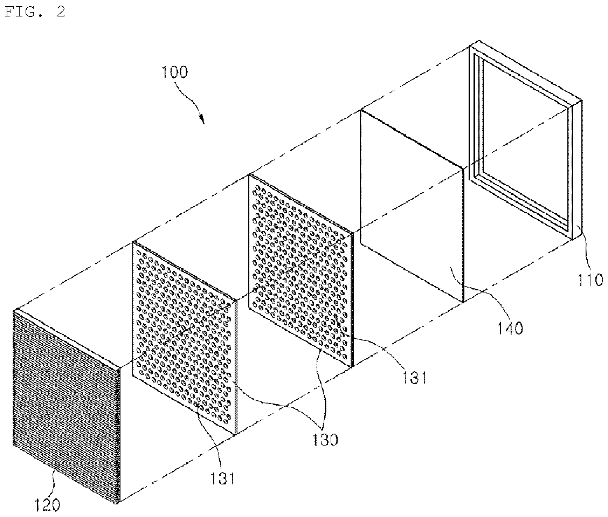

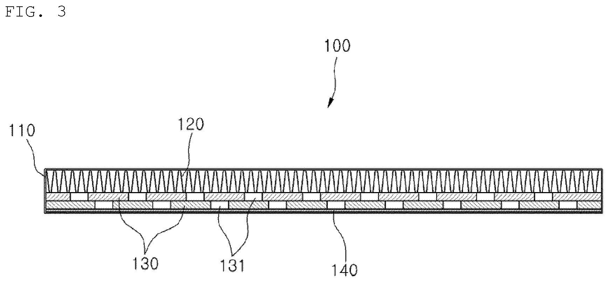

FIGS. 1 to 7 of the accompanying drawings are figures for illustrating a cabin filter unit according to the present invention.

A cabin filter unit 100 according to an embodiment of the present invention, as shown in FIGS. 1 to 6, includes a HEPA filter 120 and a carbon block filter 130 that are attached inside an edge-type paper mockup 110 having a frame structure and are placed at the front and rear.

The cabin filter unit 100 may further include a non-woven fabric 140 placed at the rear end of the carbon block filter 130.

The HEPA filter 120, which is placed at the front end to collect particulate contaminants including microdustor virus contained in the external air, is provided to block and prevent particulate contaminants from entering inward.

The HEPA filter 120 has a structure similar to a net and has a function of passing air and blocking particulate contaminants, and is formed by compressing a glass fiber. The performance of the HEPA filter 120 can be controlled by adjusting the diameter of the glass fiber or the filter thickness.

The HEPA filter 120 is manufactured in a corrugated structure so that the surface for collecting particulate contaminants can be increased, and is usually provided to increase the efficiency of removing microdust.

It is preferable that a HEPA filter of H11 or higher is employed and used for the HEPA filter 120 to satisfy the collection ratio of 95% or more with reference to 0.3µm particles.

That is, the HEPA filter 120 is provided to achieve the main function for blocking microdust in terms of the use.

The carbon block filter 130 is attached inside the paper mockup 110 and placed at the rear end of the HEPA filter 120 to adsorb and remove various harmful gases such as nitrogen dioxide (NO₂), ammonia (NH₃), sulfur dioxide (SO₂), and toluene contained in the external air.

The carbon block filter 130 also performs a deodorization function of removing smell from various harmful gases.

The carbon block filter 130 has a structure which has multiple perforations 131 formed and distributed throughout the entire area thereof to enable smooth flow of air.

The perforations 131 may be formed in various shapes such as a circle, a rectangle, or a hexagon, and it is preferable that the size of the perforations is about Ø7 to 10 to satisfy a perforation ratio of 30 to 50% with reference to the size of Ø7 to 10.

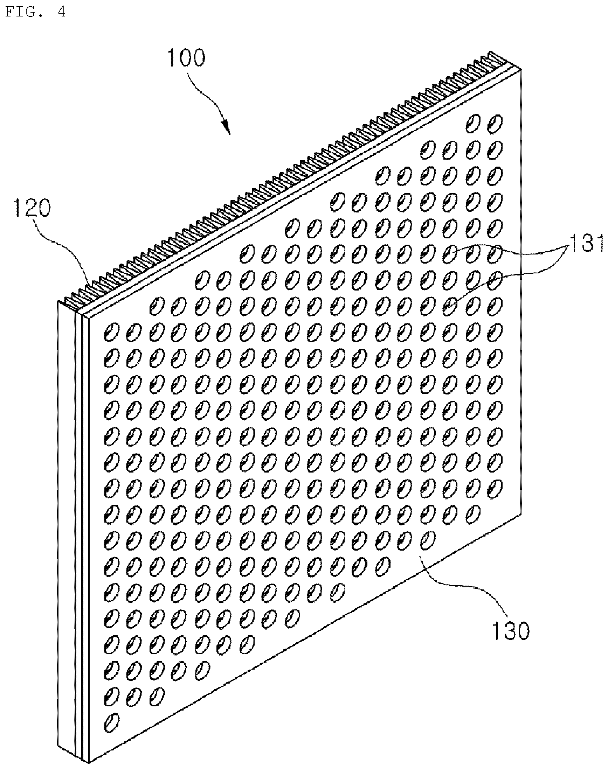

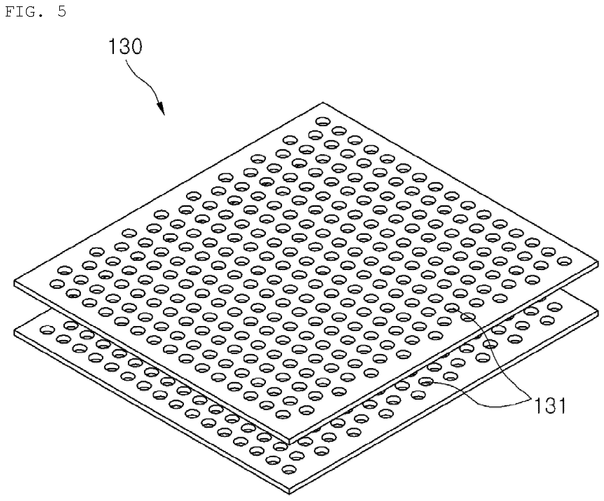

One carbon block filter 130 may be provided, as shown in FIG. 4, or two carbon block filters 130 may be stacked, as shown in FIG. 5.

A configuration of two or more carbon block filters 130 being stacked may also be possible.

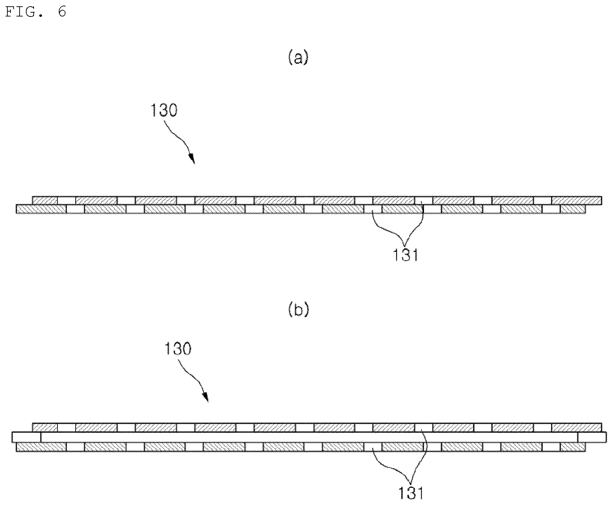

When two or more carbon block filters 130 are stacked, as shown in FIG. 6, they may be disposed in close contact with each other or may be spaced apart from each other.

When two or more carbon block filters 130 are stacked, it may be preferable that the carbon block filters 130 are stacked up and down such that perforations 131 corresponding to each other of the carbon block filters 130 not entirely but partially communicate with each other.

Accordingly, the air passing through the cabin filter unit 100 stays longer in the carbon block filters 130, thereby being able to provide the advantage that it is possible to increase the adsorption performance and removal efficiency.

The carbon block filter 130 may be manufactured through the following manufacturing process to increase the efficiency of removing harmful gases.

To this end, activated carbon and a polymer binder are mixed at a weight ratio of 10:1.5 to 2.

It is preferable that the activated carbon is coconutactivated carbon, and more preferably, the activated carbon may have a granular size that can pass a 30×60 mesh or a 20×45 mesh.

It is preferable that the polymer binder is ultrahigh molecular weight polyethylene (UHMWPE).

The coconutactivated carbon has a characteristic of a large specific surface area (pores) and an excellent adsorption ability, so it can provide an advantage in that it is very advantageous in removing harmful gases.

For example, it is possible to maintain 1100 to 1400m²/g for the specific surface area and show performance of 1100 to 1300mg/g for iodine adsorption ability.

The mixture of the activated carbon and the polymer binder is put into a mold and then thermally treated, whereby a block is formed.

The forming condition in the mold may be temperature of 210°C to 250°C, pressing pressure of 5Kgf/cm² to 10Kgf/cm², and time of 5 to 15 minutes.

The mixture in the mold may be cooled in the air for 20 minutes to manufacture the block.

Post-processing treatment may be performed as follows to increase the performance of adsorbing harmful gases by giving adhesion performance to the carbon block filter 130.

To this end, a mixed solution of DI water and phosphoric acid (H₃PO₄) of 15% is prepared, is put into the carbon block filter, and then undergoes primary impregnation for 15 to 30 minutes.

The DI water may be deionized water or ultrapure distilled water.

In the primary impregnation, about 15 to 20 minutes is preferable when one carbon block filter is impregnated, and about 20 to 30 minutes is preferable when two carbon block filter is impregnated.

Primary drying is performed on the carbon block filter impregnated in the solution mixed with phosphoric acid.

A dry oven may be used for the drying. About 20 to 30 minutes is preferable when one carbon block filter is dried, and about 2 to 3 hours is preferable when two carbon block filters are dried.

The carbon block that has undergone the primary drying is put into a mixed solution of DI water, KI of 3%, and KOH of 20% and then secondary impregnation is performed for 20 to 30 minutes.

The DI water may be deionized water or distilled water.

In the secondary impregnation, KI and KOH are not used together and may be separately used.

Secondary drying is performed on the carbon block filter impregnated in the solution mixed with KI and KOH.

A dry oven may also be used for the drying in this case. 2 to 3 hours is preferable for both when one carbon block filter is dried and when two carbon block filters are dried.

The non-woven fabric 140 is placed at the rear end of the carbon block filter 130.

The non-woven fabric 140 is fabricated in a felt type by arranging fibers in a parallel or indefinite direction without a weaving process and then combining the fibers using a synthetic resin adhesive to exhibit a filtering function.

For the post-processing treatment for giving impregnation performance to the carbon block filter 130, the efficiency of adsorbing and removing harmful gas was tested and the result is shown in the following Tables 1 to 4.

The harmful gas test was performed for each of three cases of "one carbon block filter", "two carbon block filters", and "two carbon block filters + non-woven fabric", in which four kinds of harmful gases of nitrogen dioxide (NO₂), ammonia (NH₃), sulfur dioxide (SO₂), and toluene were used.

**[Table 1]**

| | | | | | | |
|---|---|---|---|---|---|---|
| Item | | Time (min) | | | | Remark |
| | Inlet (Initial concentration) | 5 min | 10 min | 20 min | 30 min | Target gas (Test gas) NH3 |
| One carbon block | 30ppm | 25ppm | 16ppm | 8ppm | 3ppm (90%) | |
| Two carbon blocks | 30ppm | 20ppm | 9ppm | 3ppm | 0.5ppm (99%) | |
| Non-woven fabric + two carbon blocks | 30ppm | 20ppm | 8ppm | 4ppm | 0.5ppm (99%) | |

**[Table 2]**

| | | | | | | |
|---|---|---|---|---|---|---|
| Item | | Time (min) | | | | Remark |
| | Inlet (Initial concentration) | 5 min | 10 min | 20 min | 30 min | Target gas (Test gas) Toluene |
| One carbon block | 50ppm | 35ppm | 16ppm | 8ppm | 5ppm (90%) | |
| Two carbon blocks | 50ppm | 20ppm | 9ppm | 5ppm | 0.5ppm (99%) | |
| Non-woven fabric + two carbon blocks | 50ppm | 19ppm | 8ppm | 3.5ppm | 0.4ppm (99.2%_{↑}) | |

**[Table 3]**

| | | | | | | |
|---|---|---|---|---|---|---|
| Item | | Time (min) | | | | Remark |
| | Inlet (Initial concentration) | 5 min | 10 min | 20 min | 30 min | Target gas (Test gas) SO2 |
| One carbon block | 40ppm | 30ppm | 22ppm | 14ppm | 8ppm (90%) | |
| Two carbon blocks | 40ppm | 24ppm | 12ppm | 7ppm | 1ppm (99%) | |
| Non-woven fabric + two carbon blocks | 40ppm | 22ppm | 11ppm | 6ppm | 0.5ppm (99%) | |

**[Table 4]**

| Item | | Time (min) | | | | Remark |
|---|---|---|---|---|---|---|
| | Inlet (Initial concentration) | 5 min | 10 min | 20 min | 30 min | Target gas (Test gas) NO2 |
| One carbon block | 20ppm | 17ppm | 12ppm | 6ppm | 2ppm (90%) | |
| Two carbon blocks | 20ppm | 12ppm | 7ppm | 3ppm | 0.4ppm (96%) | |
| Non-woven fabric + two carbon blocks | 20ppm | 12ppm | 7ppm | 2.5ppm | 0.4ppm (96%) | |

As in the harmful gas test result shown in Tables 1 and 2, it can be seen that the adsorption and removal rate gradually increase over time for four kinds of harmful gases of nitrogen dioxide (NO₂), ammonia (NH₃), sulfur dioxide (SO₂), and toluene through a post-processing treatment for giving the impregnation performance in the present invention.

The result shows that the adsorption and removal rate is high for the four kinds of harmful gases of nitrogen dioxide (NO₂), ammonia (NH₃), sulfur dioxide (SO₂), and toluene when two carbon block filters are used, as compared to when one carbon block filter is used.

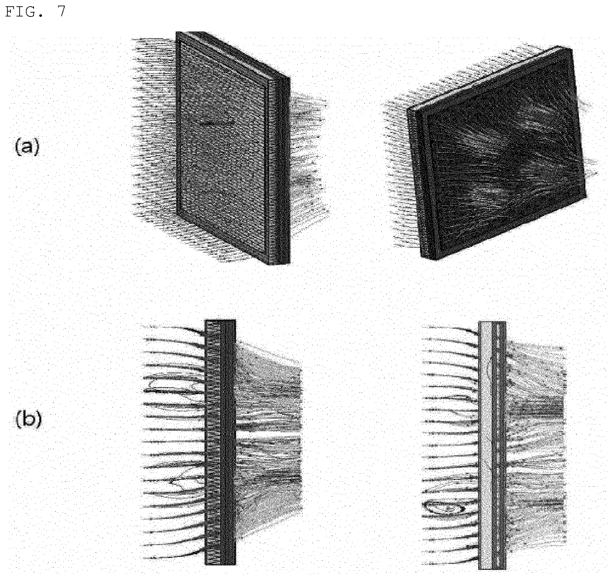

FIG. 7 shows simulation data showing a flow of air analysis result using a CFD (Computational Fluid Dynamics) program on the cabin filter unit 100 of the present invention, that is, it shows a simulation result when two carbon block filters are disposed behind a HEPA filter.

In this case, the inflow flux of flow of air was 0.4m/sec.

In (a) of FIG. 7, the left data show flow of air seen from the front and the right data show flow of air seen from the rear.

In (b) of FIG. 7, the left data show flow of air seen from the side and the right data show flow of air seen from the top.

As in the simulation data shown in FIG. 7, in the present invention, it is seen that the flow of air is relatively uniformly maintained throughout the entire area and smooth flow of air is possible.

Therefore, according to the cabin filter unit 100 having the configuration described above in accordance with the present invention, since a HEPA filter and a carbon block filter are assembled to be placed at the front and rear, there is an advantage that it is possible to simultaneously remove all of microdust, yellow dust, and various gases including sooty smoke, it is possible to achieve an excellent ability to collect and adsorb microdust and harmful gases, and it is possible to provide smooth flow of air.

The embodiments described above are only preferable embodiments of the present invention, and the present invention is not limited to the embodiments. The present invention may be changed and modified and steps may be replaced in various ways by those skilled in the art within the spirit and claims of the present invention and those are included in the scope of the present invention.

### [Reference Signs List]

100: Cabin filter unit
110: Paper mockup
120: HEPA filter
130: Carbon block filter
131: Perforation
140: Non-woven fabric

## Claims

1. A cabin filter unit comprising:
a HEPA filter; and
a carbon block filter placed at the rear end of the HEPA filter.

2. The cabin filter unit of claim 1, further comprising a non-woven fabric placed at the rear end the carbon block filter.

3. The cabin filter unit of claim 1, wherein the carbon block filter has a structure which has several perforations formed and distributed throughout the entire area thereof for flow or air, and satisfies a perforation ratio of 30 to 50% with reference to Ø7 to 10.

4. The cabin filter unit of claim 3, wherein one carbon block filter is used, or two or more carbon block filters are stacked, and when two or more carbon block filters are stacked, they can be in close contact with each other or can be spaced apart from each other.

5. The cabin filter unit of claim 4, wherein when two or more carbon block filters are stacked, the carbon block filters are stacked up and down such that perforations corresponding to each other of the carbon block filters not entirely but partially communicate with each other so that air stays longer and the performance of adsorbing harmful gas can be increased.

6. The cabin filter unit of claim 1, wherein the carbon block filter is manufactured through steps of:
mixing activated carbon and a polymer binder at a weight ratio of 10:1.5 to 2;
putting the mixture of the activated carbon and the polymer binder into a mold and performing heat treatment on the compound at temperature of 210°C to 250°C and pressure of 5Kgf/cm²to 10Kgf/cm² for 5 to 15 minutes, thereby forming a block; and
cooling in the mold for 20 minutes in the air,
wherein the activated carbon is coconutactivated carbon and has a granular size that passes a 30×60 mesh or a 20×45 mesh; and
the polymer binder is ultrahigh molecular weight polyethylene (UHMWPE).

7. The cabin filter unit of claim 1, wherein a HEPA filter of H11 or higher is used for the HEPA filter to satisfy the collection ratio of 95% or more with reference to 0.3µm particles.

8. A method of manufacturing a cabin filter that manufactures a carbon block filter by performing a post-processing treatment to increase efficiency of adsorbing harmful gas by giving impregnation performance, the method comprising:
performing primary impregnation for 15 to 30 minutes after putting a carbon block filter into a mixed solution of DI water and phosphoric acid (H₃PO₄) of 15%;
performing primary drying on the carbon block filter impregnated in the solution mixed with phosphoric acid;
performing secondary impregnation for 20 to 30 minutes after putting the carbon block filter, which has undergone the primary drying, into a mixed solution of DI water, KI of 3%, and KOH of 20%; and
performing secondary drying on the carbon block filter impregnated in the solution mixed with KI and KOH.
